# EUROPEAN PATENT APPLICATION

(11) **EP 4 837 660 A1**
(43) Date of publication of application: **11.11.2026**
(21) Application number: 24868399.7
(22) Date of filing: 22.03.2024
(51) Int. Cl.: B05C 1/02, H02K 15/02, B21D 28/02, H01F 41/02, B05D 5/10

(54) **LAMINATED CORE MANUFACTURING APPARATUS AND ADHESIVE APPLICATOR FOR MANUFACTURING LAMINATED CORE**

(30) Priority: 22.09.2023 KR 20230126924
(71) Applicant: Posco Mobility Solution Corporation, Cheonan-si, Chungcheongnam-do 31032 (KR)
(72) Inventor: KANG, Sukjo, Asan-si, Chungcheongnam-do 31417 (KR); WOO, Dukkyoun, Cheonan-si, Chungcheongnam-do 31166 (KR); CHI, Junggyu, Cheonan-si, Chungcheongnam-do 31050 (KR); PARK, Changdon, Cheonan-si Chungcheongnam-do 31158 (KR); HONG, Igyeong, Pyeongtaek-si Gyeonggi-do 17845 (KR); CHAE, Subeom, Cheonan-si Chungcheongnam-do 31032 (KR); LEE, Jeongil, Asan-si, Chungcheongnam-do 31467 (KR); KIM, Yeeun, Cheonan-si, Chungcheongnam-do 31031 (KR); LEE, Yagob, Cheonan-si, Chungcheongnam-do 31185 (KR); SEO, Seongmin, Seoul 02176 (KR); KANG, Taeho, Cheonan-si Chungcheongnam-do 31156 (KR); NAM, Kitaek, Pyeongtaek-si, Gyeonggi-do 18014 (KR); CHOI, Daeyong, Cheonan-si, Chungcheongnam-do 31187 (KR)
(74) Representative: IPAZ
(86) International application number: PCT/KR2024/003604
(87) International publication number: WO 2025/063412

(57) **Abstract**

Disclosed are a laminated core manufacturing apparatus and an adhesive applicator for manufacturing a laminated core. The adhesive applicator comprises: a body having a plurality of first holes forming adhesive paths; a cover coupled to a first side of the body so as to cover the first side, and having a plurality of second holes in communication with the first holes, through which the adhesive is discharged outward; and plugs movably provided in the first holes along the axis of the first holes in order to open and close the second holes, and contacting the inner surface of the cover parallel with the first side of the body to block the second holes. And the inner surface of the cover forms a plug blocking surface perpendicular to the axis of the first holes and the plug selectively contacts the plug blocking surface. According to the present invention, the adhesive applicator may be easily processed, the precision of the adhesive nozzles can be improved, the height regulation and processing of the adhesive nozzles are facilitated, the time required for assembling or cleaning the adhesive nozzles can be reduced, the application amount can be precisely controlled, and the number of adhesive nozzle components and manufacturing costs can be decreased.

## Description

### [Technical Field]

The present invention relates to a laminated core manufacturing apparatus and an adhesive applicator for manufacturing a laminated core, and more particularly, to a laminated core manufacturing apparatus and an adhesive applicator applying an adhesive to a strip-shaped material intermittently transferred, in order to bond laminas and manufacture the laminated core.

### [Background Art]

Generally, a laminated core refers to a core having a laminated structure manufactured by integrating multiple laminas to form a laminated structure. For example, it refers to a core made by integrating the laminas formed by blanking a metal strip.

The laminated core is used as a core of various devices such as rotators including motors, transformers, or ignition systems, and various methods for manufacturing the laminated core are known.

As a representative method for manufacturing the laminated core, a progressive die may form laminas with a predetermined shape and integrate the laminas to make the laminated core as described above.

Known methods for integrating the laminas include tap fixing method using interlock tabs, welding method such as laser welding, and riveting method.

An example of the tap fixing method is disclosed in Korean Patent Application Publication No. 10-2008-0067426, but this method has issues related to iron loss, and there are limitations in embossing process for forming the interlock tab due to a steel sheet becoming thinner.

Recently, bonding methods integrating laminas by means of adhesive have been developed and used. For example, a method disclosed in Korean Patent No. 10-1566491 includes applying an adhesive to the surface of a metal strip supplied to a progressive die and blanking the metal strip, so as to form a laminated core through the bonding method.

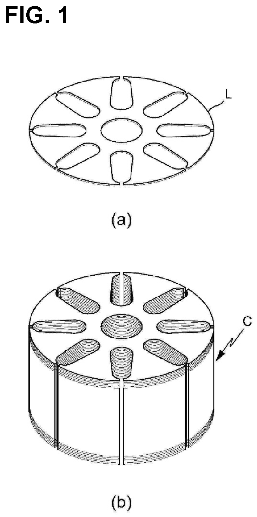

Figure 1 shows an example of a lamina and a laminated core. Multiple laminas L may be integrated in various methods as described above to form the laminated core C.

In order to manufacture the laminated core using the bonding method, the adhesive is applied in dot form at multiple points on each lamina forming portion on the metal strip. If the adhesion between the laminas is not uniform and even, the interfaces between the laminas may be split and performance and quality of the laminated core may deteriorate.

Furthermore, in order to apply adhesive at multiple points on each the lamina forming portion, the corresponding number of adhesive nozzles is required. The more application points there are, the more time is needed to classify and assemble the nozzle components. Due to height deviations of adhesive nozzles, it becomes difficult to precisely control the amount of adhesive applied, and the adhesive nozzles are more likely to break.

### [Disclosure]

### [Technical Problem]

An object of the present invention is to provide an adhesive applicator for manufacturing a laminated core and a laminated core manufacturing apparatus with the adhesive applicator, which can apply adhesive precisely to the surface of the material, and facilitate dimensional control and processing thereof.

### [Technical Solution]

An aspect of the present invention provides adhesive applicator for manufacturing laminated core, configured to apply an adhesive to a material intermittently transferred in order to bond interfaces of laminas formed by blanking process. The adhesive applicator comprises: a body having a plurality of first holes forming adhesive paths; a cover coupled to a first side of the body so as to cover the first side, and having a plurality of second holes in communication with the first holes, through which the adhesive is discharged outward; and plugs movably provided in the first holes along the axis of the first holes in order to open and close the second holes, and contacting the inner surface of the cover parallel with the first side of the body to block the second holes. And the inner surface of the cover forms a plug blocking surface perpendicular to the axis of the first holes and the plug selectively contacts the plug blocking surface.

The first side of the body may be in surface contact with the inner surface of the cover; an interface between the body and the cover forms a plane perpendicular to the axis of the first holes; an outlet of the first hole is formed on the first side of the body, and an inlet of the second hole is formed on the inner surface of the cover.

The plug may may include a plug body provided in the first hole and a cover contact surface selectively in surface contact with the plug blocking surface for blocking the second hole, and a tip protruding from the cover contact surface and movably inserted into the second hole. And the tip may protrude outward from the outlet of the second hole and be retractable into the second hole under external force.

A bottom member may be coupled to a second side of the body, and the plug may be elastically supported toward the second hole by an elastic member.

Another aspect of the present invention provides a laminated core manufacturing apparatus comprising: the aforementioned adhesive applicator; and a blanking unit configurated to blank the material and provided at one side of the adhesive applicator.

### [Advantageous Effects]

According to the present invention, the adhesive applicator may be easily processed, the precision of the adhesive nozzles can be improved, the height regulation and processing of the adhesive nozzles are facilitated, the time required for assembling or cleaning the adhesive nozzles can be reduced, the application amount can be precisely controlled, and the number of adhesive nozzle components and manufacturing costs can be decreased.

### [Description of Drawings]

The present invention can be well appreciated with reference to drawings described below jointly with a detailed description for exemplary embodiments of the present invention to be described below, in which:
FIG. 1 is a perspective view showing examples of a lamina and a laminated core.
FIG. 2 shows an embodiment of a laminated core manufacturing adhesive applicator according to the present invention.
FIG. 3 is an exploded view of the adhesive applicator shown in FIG. 2.
FIG. 4 shows various examples of plugs opening and closing nozzles.
FIG. 5 shows an embodiment of a laminated core manufacturing apparatus according to the present invention, which is a type of a progressive die.

### [Best Mode]

Hereinafter, preferred embodiments of the present invention are described with reference to the accompanying drawings. In describing the embodiments, the same name and the same reference numeral are used with respect to the same element and repetitive description thereto will be omitted. And the descriptions of technologies well known in the art are omitted.

The terms used herein are used to explain embodiments of the present invention. And when an element is mentioned as "connected" to other element, although it may be directly connected, it should be understood that it also includes a relationship with another element therebetween, that is, a relationship of indirect connection.

It should be understood that term "include" or "have" described in this specification not exclude a possibility of presence or addition of one or more other features or elements which is not mentioned in this specification.

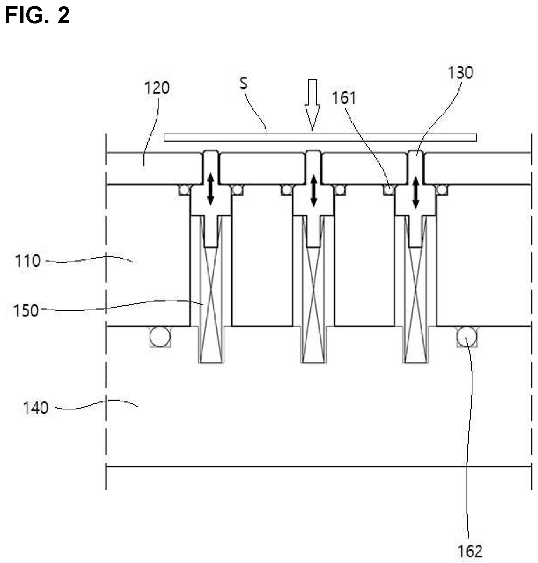

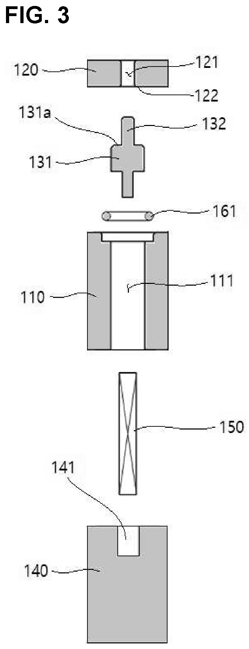

With reference to FIGS. 2 to 5, an embodiment of an adhesive applicator for manufacturing laminated cores and an embodiment of a laminated core manufacturing apparatus according to the present invention are described.

Referring to Figures 2 to 5, the adhesive applicator is a device that applies an adhesive to the surface of a material, such as a metal strip, intermittently transferred, in order to bond the interfaces of laminas formed by blanking process.

The laminated core manufacturing apparatus is configured to manufacture laminated cores by means of bonding the interfaces of laminas with the adhesive. For example, the apparatus applies the adhesive to the metal strip such as electrical steel sheet, blanks the metal strip to form laminas, and glues the laminas sequentially formed by the blanking process, thereby manufacturing the laminated core.

The adhesive applicator 100 applies the adhesive to the surface of the material, i.e., the metal strip, to glue the laminas forming the laminated core. The adhesive is interposed between the laminas by the adhesive applicator 100. More particularly, the adhesive applicator 100 can simultaneously apply the adhesive to multiple points on the surface of the material for bonding the interface of the laminas.

For example, the adhesive applicator 100 applies the adhesive to lamina forming portions of the material such as a metal strip S intermittently transferred, specifically to regions where the lamina L is to be formed.

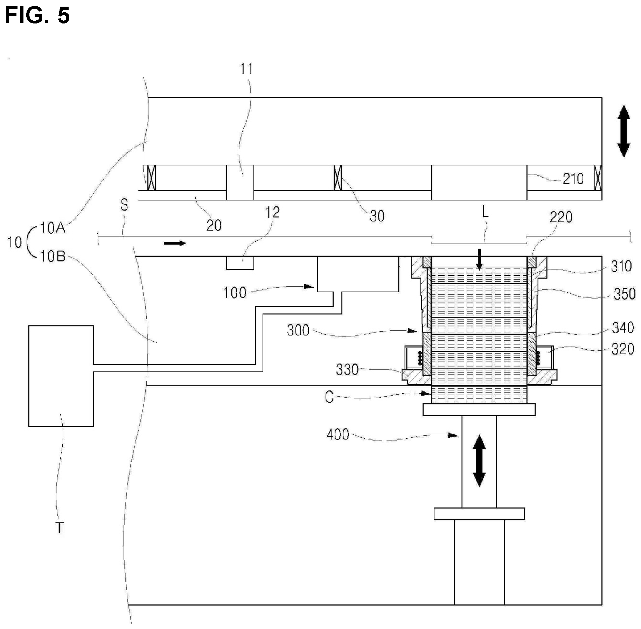

The laminated core manufacturing apparatus, as shown in Figure 5, may include a progressive die which manufactures laminated cores using the bonding method.

In the progressive die type apparatus, the adhesive applicator 100 applies the adhesive to the metal strip, i.e., the material, which is intermittently transferred.

The adhesive applicator 100 according to this embodiment includes a body 110 with a plurality of adhesive paths dispersed, a cover 120 covering the body 110, and plugs 130 provided in the body.

The body 110 has a plurality of first holes 111 that form the adhesive paths. The cover 120 has a plurality of second holes 121 communicating with the first holes 111 to discharge the adhesive to the outside of the applicator.

The plug 130 is provided in the first holes 111. More particularly, the plug 130 is provided in the first holes 111 and movable along the axis X of the first holes 111 to open and close the second hole 121, and contacts the inner surface of the cover 120 to close the second hole 121. In this embodiment, the inner surface of the cover 120 is parallel with a first side of the body 110 and faces the first side of the body 110.

The plug 130 selectively contacts the inner surface of the cover 120 which forms a plug blocking surface 122 perpendicular to the axis of the first holes. The plug 130 is blocked by the plug blocking surface 122 which limits the plug's movement. In other words, the plug blocking surface 122 acts as a stopper, and when the plug 130 is in surface contact with the inner surface of the cover, the second hole 121 is closed, thereby preventing the discharge of adhesive.

In this embodiment, the inner surface of the cover 120 is in surface contact with the first side of the body 110. The interface between the body 110 and the cover 120 is a plane perpendicular to the axis of the first holes. An outlet of the first hole 111 is formed on the first side of the body 110, and an inlet of the second hole 121 is formed on the inner surface of the cover 120.

As shown in FIG. 2, when the adhesive applicator 100 discharges the adhesive upward, the cover 120 covers the upper side of the body, the outlet of the first hole 111 is formed on the upper surface of the body 110, and the inlet of the second hole 121 is formed at the bottom of the cover 120. Conversely, when the adhesive applicator discharges the adhesive downward, the outlet of the first hole 111 is formed on the bottom of the body 110, and the upper surface of the cover 120 forms the inner surface of the cover having the inlet of the second hole 121.

The plug blocking surface 122 is perpendicular to the axis of the first holes 111 and is in surface contact with the plug. As a result, the processing and dimensional control of the first holes 111, the second holes 121, and plugs can be facilitated, and the protrusion length of tips 132 described below can be uniformly regulated. Furthermore, the first hole 111 is arranged coaxially with the second hole 121, and the second hole 121 forms a nozzle with a smaller diameter than the first hole 111.

The plug 130 includes a plug body 131 provided in the first hole 111 and a tip 132 formed on the plug body 131. The plug body 131 has a cover contact surface 131a selectively contacting the plug blocking surface 122 in order to block the second hole 121. The cover contact surface 131a faces the plug blocking surface 122.

The tip 132 protrudes from the cover contact surface 131a and is inserted movably into the second hole 121. In this embodiment, the tip 132 protrudes outward from the outlet of the second hole 121 and can be retractable into the second hole 121 under external force.

That is, when the tip 132 is pressed by the material S, the plug body 131 retreats (descends) together with the tip 132 and separates from the plug blocking surface 122, thereby opening the second hole 121.

A bottom member 140 is provided at a second side of the body 110, for example, the lower side of the body, and the plug 130 is elastically supported toward the second hole 121 by an elastic member 150 such as a spring. The elastic member 150 may be supported by the bottom member 140. In this embodiment, the bottom member 140 forms the bottom of the adhesive applicator 100. A groove 141 may be formed on the bottom member and accommodate the lower portion of the elastic member, for assembly of the elastic member.

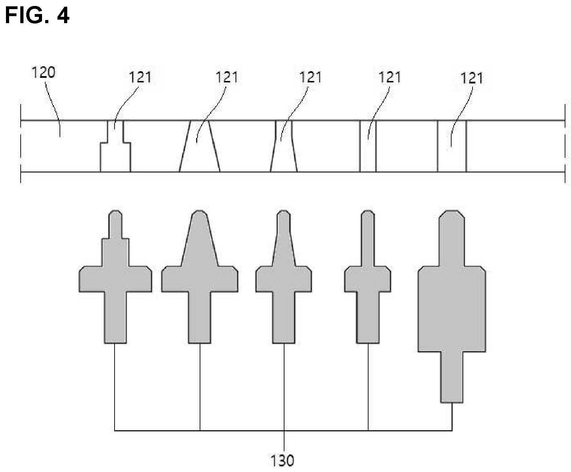

The shape of the plug can be varied. As shown in FIG. 4, tips of various shapes may be formed on a cylindrical plug body 131 with a cover contact surface perpendicular to the axis of the first hole. The size of the plug body 131 may also be varied. The shape of the plug body 131 is not limited to a cylindrical shape, and for example, the plug body may have a hexahedral shape.

According to this embodiment, when the plug body 131 moves toward the second hole 121 and contacts the plug blocking surface 122, the tip 132 protrudes a predetermined length outside the second hole 121, and the plug body 131 blocks the second hole 121. Since the first hole 111 is formed on a flat side of the body and the second hole 121 is formed on the flat inner surface of the cover, the inner surface of the flat cover restricts the movement of the plug body, the processing of the adhesive applicator and dimensional control of each component may become easier.

The plug 130 is also referred to a nozzle ball. When the tip 132 is pressed, the plug body 131 retreats and the second hole 121 opens, for allowing the adhesive to be discharged through the second hole 121. The diameter of the first hole 111 may increase toward the bottom member 140.

A sealing groove may be formed on the first side of the body 110, for installing a sealing member 161 such as O-rings, and a separate sealing groove for installing a sealing member 162 may be formed at the bottom member 140.

According to this embodiment, when the tip 132 is pressed by the material S, the adhesive is discharged through the second hole 121 and applied to the surface of the material. In other words, the adhesive applicator may include a pressure-type nozzle.

This embodiment includes plural nozzles, i.e., second holes 121 integrally formed in a single adhesive applicator 100, and allows adhesive to be applied simultaneously to multiple points. The body 110 and cover 120 can be manufactured in a plate form, the body is a body plate that accommodates the plug, i.e., nozzle ball, and the cover serves as a ball clamping plate or cover plate which restricts the plug.

The body and cover can be coupled by fastening elements such as bolts, or the cover may be fixed to the body by a holder.

Although not shown in the drawings, the adhesive applicator 100 receives adhesive from an adhesive supply unit T, i.e., a dispenser, and the adhesive delivered from the adhesive supply unit is distributed into the first holes of the body 110.

As mentioned above, the adhesive applicator 100 can be installed at the progressive die type apparatus, where the adhesive applicator 100 is provided at the die 10 of a press device, and the adhesive discharged through the second hole 121 is applied to the surface of the metal strip S.

In this embodiment, the die 10 includes an upper die 10A that can move up and down and a lower die 10B provided below the upper die 10A. The metal strip S is fed between the upper die and the lower die and passes through the die 10 by a predetermined length, i.e., one pitch at a time. The adhesive applicator 100 is provided at the lower die 10B and discharges the adhesive upwards.

Alternatively, the adhesive applicator 100 may be provided at the upper die 10A to discharge the adhesive downwards and apply the adhesive to the upper surface of the metal strip S.

The upper die 10A is equipped with a plate 20 which serves as a stripper when the upper die 10A is lifted and presses the metal strip S when the upper die 10A descends. Since the plate serving as the stripper in a progressive die is a known device, therefore an additional description regarding the plate is omitted. Reference numeral 30 represents a spring that elastically supports the plate 20.

As described above, the laminated core manufacturing apparatus may comprise the progressive die type apparatus including the adhesive applicator 100. The apparatus applies the adhesive to the intermittently transferred metal strip S, blanks the metal strip S to sequentially form laminas L, and bonds the laminas L to make the laminated core C.

The laminated core manufacturing apparatus includes the adhesive applicator 100 and a blanking unit which blanks the material S to form the laminas L. The blanking unit punches the material at one side of the adhesive applicator 100, more specifically, downstream of the adhesive applicator in the transfer direction of the material.

The blanking unit includes a blanking punch 210 and a blanking die 220 facing the blanking punch. The blanking punch 210 is provided at the upper die 10A, and the blanking die 220 is provided at the lower die 10B.

Additionally, a stacking die 300 is provided below the blanking die 220, in order to align, stack and integrate the laminas. The stacking die 300 includes a squeeze ring 310, which is provided below the blanking die 220 and may induce the aligned lamination and straight pass of the laminas L.

The squeeze ring 310 is an element that aligns and passes the laminas L on the same axis, the laminas being sequentially formed by the blanking punch and the blanking die. The squeeze ring guides the alignment and movement of the laminas L and is a technology known to those skilled in this art.

The blanking punch 210 and die 220 are devices blanking the material, i.e., the metal strip S, to form the laminas L. The blanking punch punches the metal strip S to sequentially form the laminas, and pushes laminas L into the interior of the squeeze ring 310.

A back pressure unit 400 may be provided below the stacking die 300 to support the bottom of the laminated core C discharged from the stacking die 300.

In this embodiment, the stacking die 300 forms the laminated core C when the laminas L input from above the squeeze ring 310 pass in a stacked state. More particularly, the stacking die 300 bonds and integrates a plurality of laminas L passing through the stacking die 300 from top to bottom, and continuously forms and discharges laminated cores C downward.

The back pressure unit 400 is elevatably provided below the stacking die 300 so as to sequentially support the laminated cores C discharged from the stacking die 300. The back pressure unit 400 moves toward a lower end (exit) of the stacking die 300 to support the bottom of the laminated core C discharged from the stacking die 300 and descends while supporting the laminated core C. After unloading of one laminated core from the back pressure unit, the pressure unit rises again to support the bottom of a next laminated core. The function of the back pressure unit and the mechanism for extracting the laminated core are well known to those skilled in the art, additional explanation is omitted.

The stacking die 300 may further include a heater 320 to cure the adhesive by heating, thereby bonding a plurality of laminas L together. The stacking die may further include a pincher 330 for preventing the laminated core C from falling.

A guide 340 may be provided between the squeeze ring 310 and the pincher mechanism 330, to guide the laminas L. In this embodiment, the heater 320 is provided between the squeeze ring 310 and the pincher 330, and the guide 340 provided within the heater 320, but the structure of the stacking die is not limited thereto.

The heater 320 may include a high-frequency induction heating device, but the type of heaters is not limited thereto. The elements such as the squeeze ring, heater, and pincher are known to those skilled in the art, so further explanation of these elements is omitted.

As described above, the laminated core manufacturing apparatus according to this embodiment may heat to cure the adhesive interposed between the laminas L, and bond and integrate a predetermined sheets of laminas in order to form the laminated core C.

Furthermore, the upper die 10A may also further include at least one punch 11 for forming a slot or a hole (e.g., a center hole of the lamina), and a die hole 12 facing the punch 11 may be provided on an upper surface of the lower die 10B. Since examples of punching devices provided in the upper die and the lower die for processing the shape of the lamina are variously known in the progressive die apparatus, therefore its additional description is omitted.

In FIG. 5, the laminas L stacked vertically inside the stacking die 300 are separated based on a solid line, and a boundary surface marked with dotted lines represents interfaces (adhesive interfaces) where interlayer bonding is made. To allow the laminated cores (C) to be separated based on the solid lines, the adhesive applicator 100 skips adhesive application at a predetermined timing. For example, the adhesive applicator 100 moves down at a predetermined height to prevent the plug 120 from being pressed by the material S, every time (idle process) when skipping of the adhesive application is needed.

The stacking die 300 may rotate the laminas by a predetermined angle for the index rotation stacking. For example, the squeeze ring 310 and pincher 330 may rotate simultaneously at the same angular speed.

The basic technology of forming laminas by means of blanking process and integrating the laminas using the bonding method to manufacture the laminated core is well known to those skilled in the art, therefore further description thereof is omitted.

Although the preferred embodiments of the present invention have been disclosed for illustrative purposes, it should be understood by those skilled in the art that these embodiments are given by way of illustration only and the present invention is not limited thereto.

Therefore, various modifications, variations, and alterations can be made by those skilled in the art without departing from the spirit and scope of the present invention. And the scope of the invention should be limited only by the accompanying claims and equivalents thereof.

### [Industrial Applicability]

The present invention can be applicable to the manufacture of laminated cores and motors, etc. According to the present invention, an adhesive applicator for progressive dies can be easily manufactured.

## Claims

1. An adhesive applicator for manufacturing laminated core, configured to apply an adhesive to a material intermittently transferred, in order to bond interfaces of laminas formed by blanking process, comprising:
a body having a plurality of first holes forming adhesive paths;
a cover coupled to a first side of the body so as to cover the first side, and having a plurality of second holes in communication with the first holes, through which the adhesive is discharged outward; and
plugs movably provided in the first holes along the axis of the first holes in order to open and close the second holes, and contacting the inner surface of the cover parallel with the first side of the body to block the second holes;
Wherein the inner surface of the cover forms a plug blocking surface perpendicular to the axis of the first holes and the plug selectively contacts the plug blocking surface.

2. The adhesive applicator of claim 1, wherein the first side of the body is in surface contact with the inner surface of the cover; an interface between the body and the cover forms a plane perpendicular to the axis of the first holes; an outlet of the first hole is formed on the first side of the body, and an inlet of the second hole is formed on the inner surface of the cover.

3. The adhesive applicator of Claim 1, wherein the plug includes a plug body provided in the first hole and a cover contact surface selectively in surface contact with the plug blocking surface for blocking the second hole, and a tip protruding from the cover contact surface and movably inserted into the second hole; and
wherein the tip protrudes outward from the outlet of the second hole and is retractable into the second hole under external force.

4. The adhesive applicator of Claim 1, wherein a bottom member is coupled to a second side of the body; and the plug is elastically supported toward the second hole by an elastic member.

5. A laminated core manufacturing apparatus comprising:
the adhesive applicator of any one of claims 1 to 4; and
a blanking unit provided at one side of the adhesive applicator and configurated to blank the material.
